# EUROPEAN PATENT APPLICATION

(11) **EP 4 293 300 A1**
(43) Date of publication of application: **20.12.2023**
(21) Application number: 22178721.1
(22) Date of filing: 13.06.2022
(51) Int. Cl.: F25B 49/00, F16K 31/02, H02J 7/34, F24F 11/32

(54) **REFRIGERATION CYCLE APPARATUS**

(71) Applicant: Daikin Europe N.V., 8400 Oostende (BE)
(72) Inventor: Otani, Atsushi, Osaka 530-001 (JP); Fujimoto, Yusuke, Osaka 530-001 (JP); Takahashi, Jun, Osaka 530-001 (JP)
(74) Representative: Hoffmann Eitle

(57) **Abstract**

An air conditioner (1) includes a refrigerant circuit (19), a main board (200), and a backup board (300). The refrigerant circuit (19) includes a shutoff valve (58A to 58D, 59A to 59D) that shuts off a refrigerant flow. The main board (200) includes a microcomputer (220) that controls the shutoff valve (58A to 58D, 59A to 59D). The backup board (300) supplies power from a capacitor (330) to the main board (200). The backup board (300) includes a charging circuit (320) that receives power supply from an outside and charges the capacitor (330). The microcomputer (220) detects whether the backup board (300) is connected to the main board (200) based on a voltage on the upstream side of the charging circuit (320).

## Description

### BACKGROUND OF THE INVENTION

### Field of the Invention

The present invention relates to a refrigeration cycle apparatus.

### Description of the Related Art

As described in WO 2018/167811 A, known is a refrigeration cycle apparatus that can close a valve by discharging a capacitor using a backup power source circuit when power supply from the outside is lost due to a power failure. In the refrigeration cycle apparatus, a refrigerant can be shut off by a refrigerant shutoff valve even during the power failure.

### SUMMARY OF THE INVENTION

The valve can be controlled to shut off the refrigerant even during the power failure as described above as long as the backup power source circuit is normally connected.

However, if detection as to whether the backup power source circuit is normally connected is performed by monitoring a voltage of the power source supplied from the power source circuit, a detection time becomes long in a case where the capacitor has a large capacitance and a long time is required for charging. Then, a determination as to whether the backup power source circuit is normally connected is not confirmed until a long detection time elapses, and there occurs a problem, for example, that it is difficult to immediately start the operation of the refrigeration cycle apparatus.

A refrigeration cycle apparatus according to a first aspect includes a refrigerant circuit, a first board, and a backup power source circuit. The refrigerant circuit includes a first valve that shuts off a refrigerant flow. The first board includes a first control unit that controls the first valve. The backup power source circuit supplies power from a first capacitor to the first board. The backup power source circuit includes a charging unit that receives power supply from an outside and charges the first capacitor. The first control unit detects whether the backup power source circuit is connected to the first board based on a voltage on the upstream side of the charging unit of the backup power source circuit.

Here, whether the backup power source circuit is connected to the first board is detected based on the voltage on the upstream side of the charging unit even in a case where the first capacitor has a large capacitance and a long time is required for charging, so that the detection can be performed before the first capacitor is sufficiently charged.

A refrigeration cycle apparatus according to a second aspect is the refrigeration cycle apparatus according to the first aspect, in which the refrigerant circuit further includes a compressor that compresses the refrigerant. The refrigeration cycle apparatus further includes an operation control unit that controls the compressor. The operation control unit does not start the compressor when the first control unit detects that the backup power source circuit is not connected to the first board.

In a case where the backup power source circuit is not connected to the first board, there is a possibility that it becomes difficult for the first control unit to switch the first valve that shuts off the flow of the refrigerant to a shutoff state when a power failure or the like occurs. Thus, in the refrigeration cycle apparatus according to the second aspect, the operation control unit is configured such that the compressor is not started when the backup power source circuit is not connected to the first board. As a result, it is possible to prevent a problem that it is difficult for the first valve to shut off the flow of the refrigerant due to the disconnection between the backup power source circuit and the first board when the power failure or the like occurs.

A refrigeration cycle apparatus according to a third aspect is the refrigeration cycle apparatus according to the first or second aspect, in which the first control unit further detects whether the first capacitor is charged based on a voltage of power supplied from the first capacitor to the first board.

Here, the first control unit not only detects whether the backup power source circuit is connected to the first board but also detects whether the first capacitor is charged. When the first capacitor is not charged to a predetermined capacitance for some reason, there is a possibility that sufficient power is not suppliable from the first capacitor to the first board when the power failure or the like occurs, and it is difficult for the first control unit to switch the state of the first valve. However, the first control unit detects whether the first capacitor is charged in the refrigeration cycle apparatus according to the third aspect, and thus, it is possible to perform a notification based on a result of the detection or stop or change the operation of the refrigeration cycle apparatus.

A refrigeration cycle apparatus according to a fourth aspect is the refrigeration cycle apparatus according to the third aspect, further including a notification unit. The notification unit performs a notification when the first control unit detects that the first capacitor is not charged.

Here, an administrator or a user of the refrigeration cycle apparatus who has been notified by the notification unit can determine whether to stop the operation of the refrigeration cycle apparatus and perform maintenance of the first capacitor or the like.

A refrigeration cycle apparatus according to a fifth aspect is the refrigeration cycle apparatus according to any one of the first to fourth aspects, in which the refrigerant circuit further includes a second valve that shuts off the flow of the refrigerant. The refrigeration cycle apparatus further includes a second board. The second board includes a second control unit that controls the second valve. The charging unit further charges a second capacitor. The second control unit detects whether the backup power source circuit is connected to the second board based on the voltage on the upstream side of the charging unit of the backup power source circuit.

Here, the second board and the second valve are provided in the refrigeration cycle apparatus in addition to the first board and the first valve, and the charging unit charges the second capacitor in addition to the first capacitor. Then, the second control unit detects whether the backup power source circuit is connected to the second board based on the voltage on the upstream side of the charging unit of the backup power source circuit. As a result, whether the backup power source circuit is connected to the second board is detected based on the voltage on the upstream side of the charging unit even in a case where the second capacitor has a large capacitance and a long time is required for charging, so that the detection can be performed before the second capacitor is sufficiently charged.

### BRIEF DESCRIPTION OF THE DRAWINGS

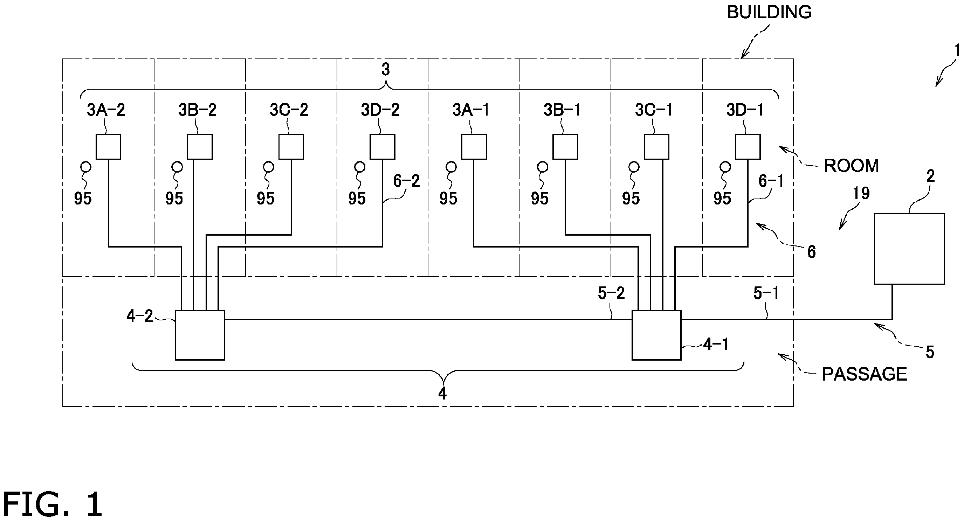

FIG. 1 is an overall configuration diagram of an air conditioner 1 of a first embodiment;
FIG. 2 is a diagram illustrating a refrigerant circuit (in which only a heat source unit 2 is illustrated in detail) and a communication circuit of the air conditioner 1 of the first embodiment;
FIG. 3 is a diagram of a refrigerant circuit of the air conditioner 1 (in which only a refrigerant flow path switching unit 4-1 and utilization units 3A-1 to 3D-1 connected to the refrigerant flow path switching unit 4-1 are illustrated in detail);
FIG. 4 is an external view of the refrigerant flow path switching unit 4 according to the first embodiment;
FIG. 5 is a diagram illustrating a main board 200 and a backup board 300 in an electric component box 140 of the refrigerant flow path switching unit 4 of the first embodiment, a board as a connection destination to which the main board 200 is connected, and the like;
FIG. 6 is a diagram illustrating detection of a connection of the backup board and detection of charging of a capacitor according to the first embodiment;
FIG. 7 is a flowchart of initial control of an air conditioning operation of the air conditioner 1 of the first embodiment;
FIG. 8 is a diagram illustrating a first main board 200-1 to a third main board 200-3, a backup board 301, and capacitor boards 700 and 800 of a refrigerant flow path switching unit of an air conditioner according to a second embodiment; and
FIG. 9 is a diagram illustrating devices connected to the first main board 200-1 to the third main board 200-3 of the refrigerant flow path switching unit of the air conditioner according to the second embodiment.

### DETAILED DESCRIPTION OF PREFERRED EMBODIMENTS

An air conditioner which is one of specific aspects of a refrigeration cycle apparatus will be described with reference to the drawings.

### <First Embodiment>

### (1) Overall configuration of air conditioner

The air conditioner 1 is an apparatus that cools and heats the interiors of rooms in a building or the like by a vapor compression refrigeration cycle. The air conditioner 1 mainly includes a heat source unit 2, a plurality of (here, eight) utilization units 3, a plurality of (here, two) refrigerant flow path switching units 4 provided between the heat source unit 2 and the utilization units 3 and switching refrigerant flows in the utilization units 3, heat source-side connection pipes 5 extending from the heat source unit 2, and utilization-side connection pipes 6 extending from the utilization units 3. A vapor compression refrigerant circuit 19 of the air conditioner 1 is configured by connecting the heat source unit 2, the utilization units 3, the refrigerant flow path switching units 4, and the connection pipes 5 and 6.

The heat source unit 2 is provided outdoors of (on a rooftop and the like) of a building. The utilization units 3 are provided in the building, and here, provided in a room, in a ceiling space of the rooms, or the like. The refrigerant flow path switching units 4 are provided in the building, and here, provided in a ceiling space of a passage.

The heat source unit 2 and the refrigerant flow path switching units 4 are connected by the heat source-side connection pipes 5. Specifically, the heat source unit 2 is connected to the refrigerant flow path switching unit 4-1 by the heat source-side connection pipe 5-1. The refrigerant flow path switching unit 4-2 is connected to the refrigerant flow path switching unit 4-1 by the heat source-side connection pipe 5-2.

The utilization units 3 and the refrigerant flow path switching units 4 are connected by the utilization-side connection pipes 6. Specifically, the refrigerant flow path switching unit 4-1 is connected to a plurality of (here, four) utilization units 3A-1 to 3D-1 by the utilization-side connection pipes 6-1. The refrigerant flow path switching unit 4-2 is connected to a plurality of (here, four) utilization units 3A-2 to 3D-2 by the utilization-side connection pipes 6-2.

Then, the air conditioner 1 can switch the refrigerant flows in the utilization units 3 for each of the utilization units 3 using the refrigerant flow path switching units 4. The air conditioner 1 is a so-called cooling and heating free type air conditioner capable of individually performing a cooling operation or a heating operation for each of the utilization units 3.

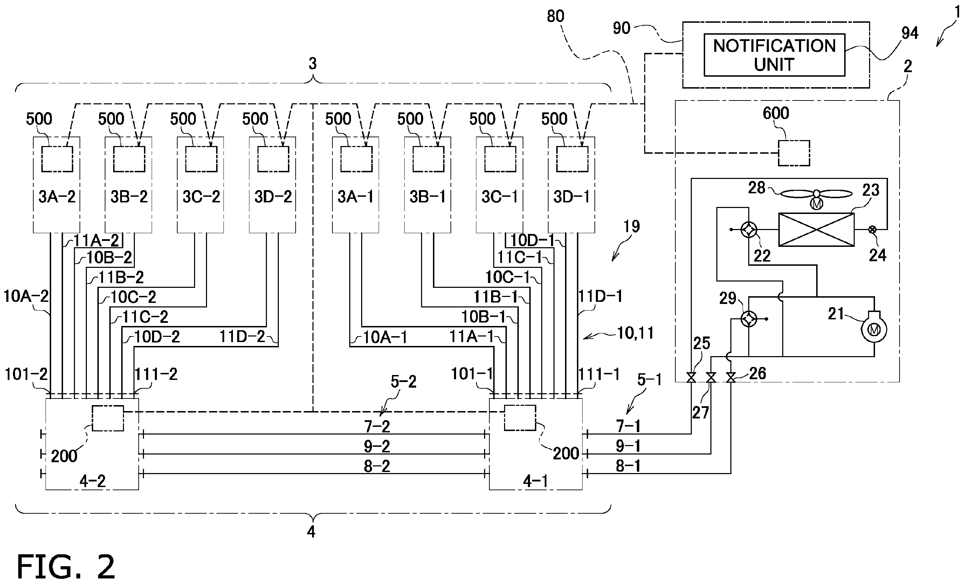

The air conditioner 1 is controlled by a control system including an outdoor control board 600 in the heat source unit 2, indoor control boards 500 in the utilization units 3, and main boards 200 in the refrigerant flow path switching units 4. As illustrated in FIG. 2, a monitoring computer 90 is connected to a communication line 80 connecting the respective boards 600, 500, and 200. The monitoring computer 90 includes a notification unit 94 including a display and/or a buzzer.

### (2) Detailed configuration of air conditioner

### (2-1) Heat source unit

The heat source unit 2 is connected to the refrigerant flow path switching units 4 via the heat source-side connection pipes 5 and forms a part of the refrigerant circuit 19.

The heat source-side connection pipe 5 has a first heat source-side connection pipe 7, a second heat source-side connection pipe 8, and a third heat source-side connection pipe 9. The heat source unit 2 and the refrigerant flow path switching unit 4 are connected by a set of three types of the heat source-side connection pipes 7, 8, and 9. Specifically, the heat source unit 2 is connected to the refrigerant flow path switching unit 4-1 by the heat source-side connection pipes 7-1, 8-1, and 9-1 as illustrated in FIG. 2. The refrigerant flow path switching unit 4-1 is connected to the refrigerant flow path switching unit 4-2 by the heat source-side connection pipes 7-2, 8-2, and 9-2.

Next, a circuit configuration of the heat source unit 2 will be described. The heat source unit 2 mainly includes a compressor 21, a first heat source-side switching valve 22, a heat source-side heat exchanger 23, a heat source-side expansion valve 24, and a plurality of (here, three) closing valves 25 to 27, and a second heat source-side switching valve 29.

When the heat source-side heat exchanger 23 functions as a radiator of the refrigerant, the first heat source-side switching valve 22 can connect a discharge side of the compressor 21 and a gas side of the heat source-side heat exchanger 23 (see a solid line of the first heat source-side switching valve 22 in FIG. 2). In addition, when the heat source-side heat exchanger 23 functions as an evaporator of the refrigerant, the first heat source-side switching valve 22 can connect a suction side of the compressor 21 and the gas side of the heat source-side heat exchanger 23 (see a broken line of the first heat source-side switching valve 22 in FIG. 2).

The heat source-side heat exchanger 23 is a heat exchanger exchanging heat between the refrigerant and outdoor air. The heat source unit 2 has a heat source-side fan 28 generating a flow of the outdoor air passing through the heat source-side heat exchanger 23.

The heat source-side expansion valve 24 is a device for decompressing the refrigerant and includes, for example, an electric expansion valve whose opening degree is adjustable.

When the second heat source-side switching valve 29 sends the refrigerant discharged from the compressor 21 to the second heat source-side connection pipe 8, the discharge side of the compressor 21 and the second closing valve 26 can be connected to each other (see a broken line of the second heat source-side switching valve 29 in FIG. 2). Further, when the second heat source-side switching valve 29 sends the refrigerant flowing through the second heat source-side connection pipe 8 to the suction side of the compressor 21, the second closing valve 26 and the suction side of the compressor 21 can be connected to each other (see a solid line of the second heat source-side switching valve 29 in FIG. 2).

The closing valves 25 to 27 are manual valves that are opened and closed when the heat source unit 2 and the outside (here, the refrigerant flow path switching units 4) are connected or disconnected.

### (2-2) Utilization unit

The utilization units 3 are connected to the refrigerant flow path switching units 4 via the utilization-side connection pipes 6, and form a part of the refrigerant circuit 19.

The utilization-side connection pipe 6 has a first utilization-side connection pipe 10 and a second utilization-side connection pipe 11. The utilization units 3 and the refrigerant flow path switching units 4 are connected by a set of two types of the utilization-side connection pipes 10 and 11. Specifically, the refrigerant flow path switching unit 4-1 is connected to the utilization units 3A-1 to 3D-1 by four sets of the utilization-side connection pipes 10-1 and 11-1 (10A-1 and 11A-1, 10B-1 and 11B-1, 10C-1 and 11C-1, and 10D-1 and 11D-1). The refrigerant flow path switching unit 4-2 is connected to the utilization units 3A-2 to 3D-2 by four sets of the utilization-side connection pipes 10-2 and 11-2 (10A-2 and 11A-2, 10B-2 and 11B-2, 10C-2 and 11C-2, and 10D-2 and 11D-2).

Next, a circuit configuration of the utilization unit 3 will be described. The utilization units 3A-1 to 3D-1 and 3A-2 to 3D-2 all have the same configuration, and thus, the description here will be made by omitting subscripts "A", "B", "C", "D", "-1", and "-2" for distinguishing the utilization units 3.

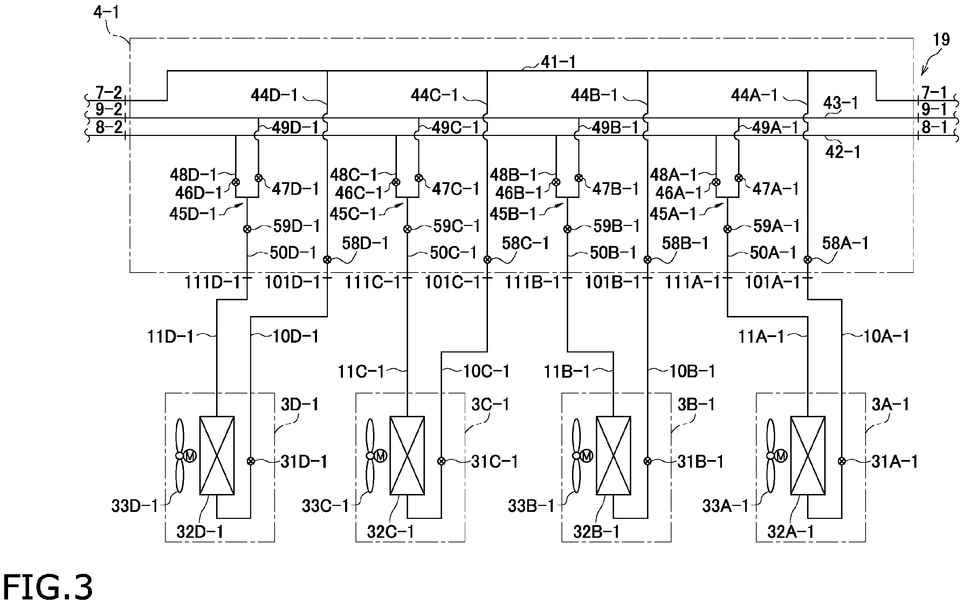

As illustrated in FIG. 3, the utilization unit 3 mainly includes a utilization-side expansion valve 31 and a utilization-side heat exchanger 32. The utilization-side expansion valve 31 is a device for decompressing the refrigerant and includes, for example, an electric expansion valve whose opening degree is adjustable. The utilization-side heat exchanger 32 is a heat exchanger exchanging heat between the refrigerant and indoor air. The utilization unit 3 has a utilization-side fan 33 generating a flow of the indoor air passing through the utilization-side heat exchanger 32.

### (2-3) Refrigerant flow path switching unit

The refrigerant flow path switching units 4 are provided between the heat source unit 2 and the utilization units 3, are connected to the heat source unit 2 via the heat source-side connection pipes 5, are connected to the utilization units 3 via the utilization-side connection pipes 6, and form a part of the refrigerant circuit 19.

Next, a circuit configuration of the refrigerant flow path switching units 4 will be described. The refrigerant flow path switching units 4-1 and 4-2 all have the same configuration, and thus, the description here will be made by omitting subscripts "-1" and "-2" for distinguishing the refrigerant flow path switching units 4 as much as possible. As illustrated in FIG. 3, the refrigerant flow path switching unit 4 mainly includes a first internal connection pipe 41, a second internal connection pipe 42, a third internal connection pipe 43, fourth internal connection pipes 44A to 44D, fifth internal connection pipes 45A to 45D, first flow path switching valves 46A to 46D, second flow path switching valves 47A to 47D, liquid-side shutoff valves 58A to 58D, and gas-side shutoff valves 59A to 59D.

### (2-3-1) Internal connection pipe

The first internal connection pipe 41 is connected to the first heat source-side connection pipe 7. The second internal connection pipe 42 is connected to the second heat source-side connection pipe 8. The third internal connection pipe 43 is connected to the third heat source-side connection pipe 9.

The plurality of (here, four) fourth internal connection pipes 44A to 44D is connected to the first internal connection pipe 41. First ends of the fourth internal connection pipes 44A to 44D are connected so as to be branched from a middle of the first internal connection pipe 41. Further, second ends of the fourth internal connection pipes 44A to 44D are connected to the first utilization-side connection pipes 10A to 10D, respectively.

A plurality of (here, four) fifth internal connection pipes 45A to 45D has sixth internal connection pipes 48A to 48D branched from the second internal connection pipe 42, seventh internal connection pipes 49A to 49D branched from the third internal connection pipe 43, and eighth internal connection pipes 50Ato 50D joining the sixth internal connection pipes 48A to 48D and the seventh internal connection pipes 49A to 49D. First ends of the sixth internal connection pipes 48A to 48D are connected to a middle of the second internal connection pipe 42, and second ends of the sixth internal connection pipes 48A to 48D are connected to first ends of the eighth internal connection pipes 50A to 50D, respectively. Further, first ends of the seventh internal connection pipes 49A to 49D are connected to a middle of the third internal connection pipe 43, and second ends of the seventh internal connection pipes 49A to 49D are connected to the first ends of the eighth internal connection pipes 50A to 50D, respectively. Second ends of the eighth internal connection pipes 50A to 50D are connected to second utilization-side connection pipes 11A to 11D, respectively.

### (2-3-2) Flow path switching valve

The plurality of (here, four) first flow path switching valves 46A to 46D is provided in the sixth internal connection pipes 48A to 48D, respectively. Further, the plurality of (here, four) second flow path switching valves 47A to 47D is provided in the seventh internal connection pipes 49A to 49D, respectively. Each of the first flow path switching valves 46A to 46D and the second flow path switching valves 47A to 47D is configured using, for example, an electric expansion valve or an electromagnetic valve. The first flow path switching valves 46A to 46D are closed when the corresponding utilization units 3A to 3D perform the cooling operation, and are opened when the corresponding utilization units 3A to 3D perform the heating operation. However, when there is no utilization unit that performs the heating operation in the entire refrigerant circuit 19, the first flow path switching valves 46A to 46D are opened even when the corresponding utilization units 3A to 3D perform the cooling operation. Further, the second flow path switching valves 47A to 47D are opened when the corresponding utilization units 3A to 3D perform the cooling operation, and are closed when the corresponding utilization units 3A to 3D perform the heating operation.

### (2-3-3) Shutoff valve

The liquid-side shutoff valves 58A to 58D are provided in the fourth internal connection pipes 44A to 44D, respectively. Each of the liquid-side shutoff valves 58A to 58D is configured using an electromagnetic valve or an electric valve. When a refrigerant leak to be described later is detected, the liquid-side shutoff valves 58A to 58D are changed from the opened state to the closed state by a microcomputer 220 of the main board 200 in an electric component box 140.

The gas-side shutoff valves 59A to 59D are provided in the eighth internal connection pipes 50A to 50D, respectively. Each of the gas-side shutoff valves 59A to 59D is configured using an electromagnetic valve or an electric valve. When the refrigerant leak to be described later is detected, the gas-side shutoff valves 59A to 59D are changed from the opened state to the closed state by the microcomputer 220 of the main board 200 in the electric component box 140.

### (2-3-4) Appearance

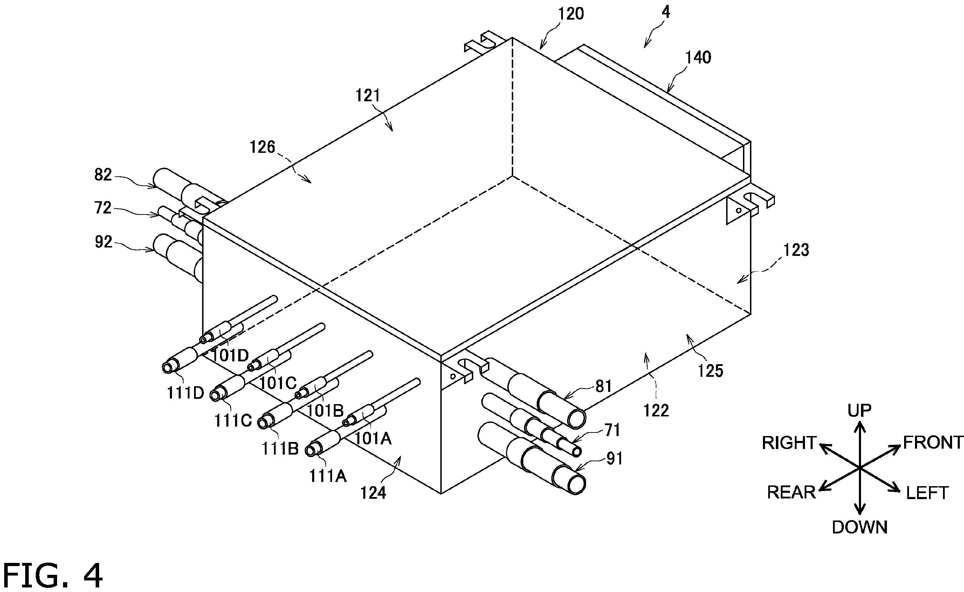

FIG. 4 is a perspective view of the appearance of the refrigerant flow path switching unit 4. The refrigerant flow path switching units 4-1 and 4-2 all have the same configuration, and thus, will be illustrated and described by omitting subscripts "-1" and "-2" for distinguishing the refrigerant flow path switching units 4. The case 120 of the refrigerant flow path switching unit 4 is a substantially rectangular parallelepiped box, and mainly includes an upper surface plate 121, a lower surface plate 122, and side surface plates 123, 124, 125, and 126. The left side surface plate 125 is provided with a first heat source-side small nozzle 71, a first heat source-side medium nozzle 81, and a first heat source-side large nozzle 91 as first heat source-side connection nozzles connected to the heat source-side connection pipes 7, 8, and 9. Further, the right side surface plate 126 is provided with a second heat source-side small nozzle 72, a second heat source-side medium nozzle 82, and a second heat source-side large nozzle 92 as second heat source-side connection nozzles connected to the heat source-side connection pipes 7, 8, and 9. Further, the rear side surface plate 124 is provided with a plurality (here, four sets) of utilization-side small nozzles 101A to 101D and utilization-side large nozzles 111A to 111D as utilization-side connection nozzles connected to the utilization-side connection pipes 10 and 11.

The electric component box 140 is mounted on the front side surface plate 123 of the case 120.

### (2-3-5) Control unit in electric component box

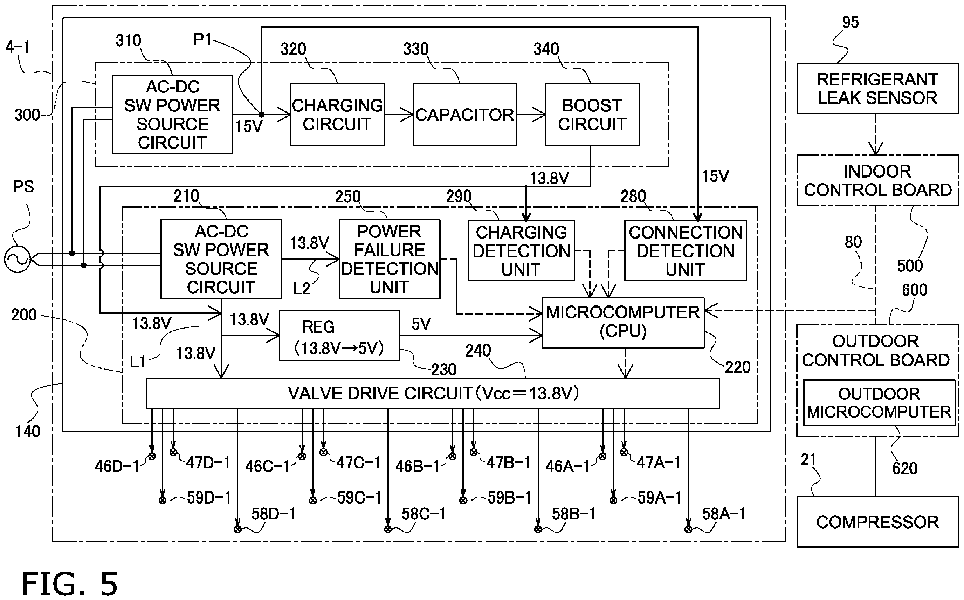

In the electric component box 140, the main board 200 is disposed as a control unit for controlling the above-described respective valves in the refrigerant flow path switching unit 4. FIG. 5 is a diagram illustrating an electric circuit of the refrigerant flow path switching unit 4. A solid line in the circuit in the figure represents a power source line, and a broken line represents a signal line. An AC voltage (for example, single-phase AC of 200 V ± 10%) is supplied from an external AC power source PS to the main board 200. Note that, for the AC voltage, two-phase two wires may be extracted from a three-phase AC power source. Similarly, an AC voltage is also supplied to a backup board 300 to be described later.

The main board 200 includes an AC-DC switching power source circuit 210, a valve drive circuit 240, a regulator 230, the microcomputer 220, a power failure detection unit 250, a connection detection unit 280, and a charging detection unit 290. The AC-DC switching power source circuit 210 converts 200 V AC to a DC voltage (13.8 V DC in the present embodiment). The output of 13.8 V DC is output while two systems are insulated from each other. A first output electric path L1 that is one of the two systems is connected to the regulator 230 and the microcomputer 220, and a second output electric path L2 that is the other of the two systems is connected to the power failure detection unit 250.

The valve drive circuit 240 can open and close the flow path switching valves 46A to 46D and 47A to 47D and the shutoff valves 58A to 58D and 59A to 59D based on the input voltage of 13.8 V DC and a valve drive signal from the microcomputer 220. The regulator 230 steps down the 13.8 V DC (steps down to 5 V DC in the present embodiment) and supplies a power supply voltage to the microcomputer 220.

The power failure detection unit 250 detects a power failure when the voltage of 13.8 V DC supplied from the AC-DC switching power source circuit 210 decreases.

Note that the power failure detection unit 250 may detect the power failure based on a voltage obtained by further stepping down the 13.8 V DC. The power failure detection unit 250 can also detect a power failure based on a decrease in an AC voltage input to the AC-DC switching power source circuit 210.

When detecting the power failure, the power failure detection unit 250 transmits a power failure signal to the microcomputer 220.

### (2-3-6) Indoor control board connected to control unit in electric component box

The indoor control board 500 is connected to a refrigerant leak sensor 95 disposed in the utilization unit 3 or in a room in which the utilization unit 3 is disposed. When detecting a refrigerant leak from the utilization unit 3 to the room, the refrigerant leak sensor 95 transmits a detection signal to the indoor control board 500. The indoor control board 500 transmits the detection signal of the refrigerant leak to the main board 200 of the refrigerant flow path switching unit 4, the outdoor control board 600 of the heat source unit 2, and the monitoring computer 90.

### (2-3-7) Backup board in electric component box

Inside the electric component box 140, the backup board 300 connected to the main board 200 is also disposed in addition to the main board 200. The backup board 300 functions as a power source that supplies an AC voltage to the main board 200 when a power failure or the like occurs and the AC voltage is no longer supplied from the external AC power source PS to the main board 200. In other words, the backup board 300 is a board that functions as a backup power source circuit that supplies a backup voltage to the first output electric path L1 during the power failure.

The backup board 300 includes an AC-DC switching power source circuit 310, a charging circuit 320, a capacitor 330, a boost circuit 340, and the like. The AC-DC switching power source circuit 310 rectifies and smooths a single-phase AC of 200 V into a DC voltage, and converts the DC voltage into a low voltage. The charging circuit 320 charges the capacitor 330 based on the DC voltage provided from the AC-DC switching power source circuit 310. The capacitor is, for example, an electric double-layer capacitor having a large capacitance. Using the capacitor 330 makes it possible to simplify a circuit and downsize a circuit board as compared with a case of using another auxiliary power source (a battery or the like). Further, using the capacitor 330 of the electric double-layer makes it possible to secure a large electrostatic capacitance while further reducing a size of the board. Note that a type of the capacitor is not limited to the electric double-layer.

An output voltage (here, about 6.2 V DC) between both end electrodes of the capacitor 330 is input to the boost circuit 340. The boost circuit 340 is a semiconductor obtained by integrating a boosting chopper into one chip, and boosts the DC voltage to 13.8 V.

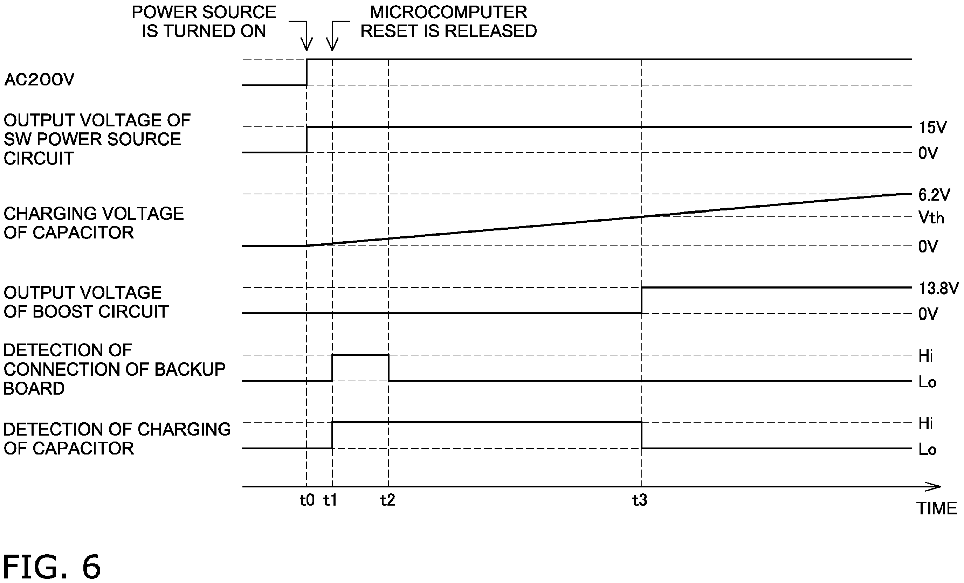

FIG. 6 is a time chart illustrating an example of a state of charging of the capacitor 330 executed by the backup board 300. After the power source is turned on at time t0, microcomputer reset is released at time t1. When unstable time after the release of the microcomputer reset elapses and time t2 comes, the connection detection unit 280 and the microcomputer 220 can detect connection or disconnection of the backup board 300. In FIG. 6, Lₒ indicates connection and Hi indicates disconnection. The microcomputer 220 of the main board 200 monitors a voltage (voltage at a point PI in FIG. 5) on the upstream side of the charging circuit 320 of the backup board 300 using the connection detection unit 280 to detect whether the backup board 300 is connected to the main board 200.

At the time t2, however, the capacitor 330 of the backup board 300 is not sufficiently charged yet, and it is not possible to detect whether the backup board 300 is connected to the main board 200 by detecting the charging of the capacitor 330.

When time further elapses and time t3 comes, a charging voltage of the capacitor 330 exceeds an operation voltage threshold Vth of the boost circuit 340, and the charging detection unit 290 can detect the charging of the capacitor 330. In FIG. 6, Lₒ indicates detection of charging, and Hi indicates non-detection of charging. The microcomputer 220 of the main board 200 monitors a voltage supplied from the capacitor 330 to the main board 200 via the boost circuit 340 using the charging detection unit 290, and detects whether the capacitor 330 is charged based on the voltage.

### (3) Normal operation of air conditioner

The air conditioner 1 having the above circuit configuration can perform a cooling only operation, a heating only operation, a cooling dominant operation, and a heating dominant operation. Here, the cooling only operation is an operation in which only the utilization units 3 performing the cooling operation exist. The heating only operation is an operation in which only the utilization units 3 performing the heating operation exist. The cooling dominant operation is an operation in which both the utilization units 3 performing the cooling operation and the utilization units 3 performing the heating operation coexist, and the first heat source-side switching valve 22 of the heat source unit 2 is in a state indicated by the solid line in FIG. 2. The heating dominant operation is an operation in which both the utilization units 3 performing the cooling operation and the utilization units 3 performing the heating operation coexist, and the first heat source-side switching valve 22 of the heat source unit 2 is in a state indicated by the broken line in FIG. 2.

Details of the respective operations are known operations of a so-called cooling and heating free type air conditioner, and thus, the description thereof is omitted here.

### (4) Operation of air conditioner when refrigerant leak has been detected

When the refrigerant leak sensor 95 detects a refrigerant leak during the operation of the air conditioner 1, the indoor control board 500 sends a refrigerant leak signal to the outdoor control board 600, the microcomputer 220 of the refrigerant flow path switching unit 4, and the monitoring computer 90. The outdoor control board 600 stops the operation of the air conditioner 1 so that the compressor 21 stops. The microcomputer 220 of the refrigerant flow path switching unit 4 sends the drive signal to the valve drive circuit 240 to fully close the shutoff valves 58A to 58D and 59Ato 59D.

The monitoring computer 90 notifies an administrator or a user of the air conditioner 1 of the refrigerant leak through the display and/or the buzzer of the notification unit 94.

In a case where the AC power source PS is normally supplying a voltage, when an operation stop manipulation of the air conditioner is performed, the operation of the air conditioner 1 is stopped, but the shutoff valves 58A to 58D and 59A to 59D remain open when there is no refrigerant leak. Even while the air conditioner 1 is stopped, the AC power source PS is active, and a voltage is supplied to the main board 200 and the backup board 300.

### (5) Operation of refrigerant flow path switching unit during power failure

After the power source is turned on, the main board 200 of the refrigerant flow path switching unit 4 outputs 13.8 V DC and 5 V DC to start power failure monitoring performed by the power failure detection unit 250. On the other hand, a voltage of the capacitor 330 is charged to 6.2 V when a predetermined time has elapsed since the power source is turned on as described above.

When a power failure of the AC power source PS occurs during the normal operation or stop of the air conditioner 1, the power failure detection unit 250 of the main board 200 detects the power failure. During the power failure, an output voltage of the AC-DC switching power source circuit 210 becomes 0 V. At the same time, 13.8 V DC is supplied to the main board 200 via the boost circuit 340 from the capacitor 330 of the backup board 300. Therefore, 13.8 V DC and 5 V DC in the main board 200 are maintained, and the microcomputer 220 can continue to operate. The microcomputer 220 outputs a drive signal for instructing the full-closure of the shutoff valves 58A to 58D and 59A to 59D to the valve drive circuit 240. In response to this, the valve drive circuit 240 outputs a drive pulse and starts to close the shutoff valves 58A to 58D and 59A to 59D. Thereafter, the voltage of the capacitor 330 gradually decreases, but 13.8 V DC is maintained by the boost circuit 340, and the shutoff valves 58A to 58D and 59A to 59D are fully closed.

Thereafter, the drive signal for the shutoff valves 58A to 58D and 59A to 59D is turned off, and the valve drive circuit 240 stops outputting the drive pulse.

When the voltage of the capacitor 330 further decreases, the boost circuit 340 is not able to output 13.8 V DC, and both 13.8 V DC and 5 V DC sent to the main board 200 become 0 V. At this point, the microcomputer 220 of the main board 200 stops operating.

### (6) Prohibition of normal operation of air conditioner

When a remote control unit or the like of the utilization unit 3 (not illustrated) sends an operation instruction, the control system of the air conditioner 1 starts the above normal operation. Further, the compressor 21 is also started for the operation even when a trial operation instruction has been issued at the time of installing the air conditioner 1.

However, when the microcomputer 220 of the refrigerant flow path switching unit 4 detects that the backup board 300 is not connected to the main board 200, the operation of the air conditioner 1 is prohibited. Specifically, the outdoor microcomputer 620 of the outdoor control board 600 of the control system of the air conditioner 1 does not start the compressor 21 even if there is the operation instruction when the backup board 300 is not connected to the main board 200.

### (7) Notification of non-detection of charging on backup board during normal operation of air conditioner

As described above, the air conditioner 1 does not start the compressor 21 even if there is an operation instruction when detecting that the backup board 300 is not connected to the main board 200. On the other hand, when detecting that the backup board 300 is connected to the main board 200, the air conditioner 1 starts the compressor 21 to perform the normal operation if there is an operation instruction even if it is detected that the capacitor 330 is not charged. For example, if there is an operation instruction during recovery from a power failure, the outdoor microcomputer 620 starts the compressor 21 to start an air conditioning operation even if the charging of the capacitor 330 is not detected.

However, when the capacitor 330 of the backup board 300 is not charged for some reason such as a component failure, it is difficult to fully close the shutoff valves 58A to 58D and 59A to 59D during the power failure. When the operation of the air conditioner 1 is continued in such a state, it is necessary to take another measure in preparation for the power failure.

In view of this, the microcomputer 220 of the refrigerant flow path switching unit 4 in the air conditioner 1 sends a signal indicating non-detection of charging of the capacitor 330 to the monitoring computer 90 when the charging detection unit 290 detects that the capacitor 330 is not charged. The computer 90 notifies the administrator or the user of the air conditioner 1 that the capacitor 330 of the backup board 300 is not charged through the display and/or the buzzer.

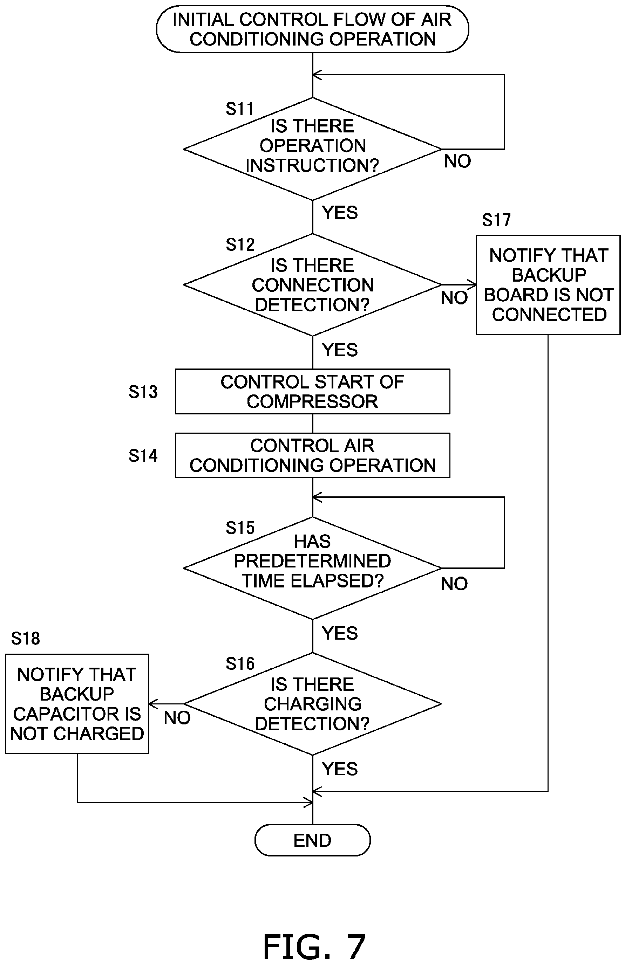

FIG. 7 illustrates an initial control flow of the operation of the air conditioner 1 including the above content of (6). When it is determined in step S11 that there is an operation instruction, it is determined in step S12 whether there is connection detection that the backup board 300 is connected to the main board 200. When there is no connection detection, the processing proceeds to step S17, and the monitoring computer 90 notifies that the backup board 300 is not connected to the main board 200. When the processing proceeds to step S17, the start of the compressor 21 is prohibited. When it is determined in step S12 that there is connection detection, the control for starting the compressor 21 and the control for the normal operation of the air conditioner 1 in steps S13 and S14 are sequentially started. In step S15, it is determined whether a predetermined time required for charging the capacitor 330 has elapsed, and the processing proceeds to step S16 if the predetermined time has elapsed since the power source is turned on. In step S16, it is determined whether the capacitor 330 is charged, and if there is no charging detection, the processing proceeds to step S18. In step S18, the monitoring computer 90 notifies the administrator or the user of the air conditioner 1 that the capacitor 330 of the backup board 300 is not charged.

### (8) Characteristics

### (8-1)

The refrigerant flow path switching unit 4 of the air conditioner 1 of the first embodiment detects whether the backup board 300 forming the backup power source circuit is connected to the main board 200 based on the voltage on the upstream side of the charging circuit 320. As a result, even when the capacitor 330 of the backup board 300 has a large capacitance and a long time (for example, several tens of minutes) is required to charge the capacitor 330, whether the backup board 300 is connected to the main board 200 can be detected before the capacitor 330 is sufficiently charged.

### (8-2)

When a power failure or the like occurs in a case where the backup board 300 is not connected to the main board 200, there is a possibility that it becomes difficult for the microcomputer 220 of the main board 200 to change the shutoff valves 58A to 58D and 59A to 59D that shut off the flow refrigerant to shutoff states. In view of this, the control system of the air conditioner 1 is configured such that the compressor 21 is not started in the case where the backup board 300 is not connected to the main board 200 in the air conditioner 1 of the first embodiment. As a result, it is possible to prevent a problem that it is difficult to shut off the refrigerant flow by the shutoff valves 58A to 58D and 59A to 59D due to the disconnection between the backup board 300 and the main board 200 when the power failure or the like occurs. For example, even in a case where a refrigerant leak is detected during a power failure, the problem that it is difficult to change the shutoff valves 58A to 58D and 59A to 59D to the shutoff states can be prevented.

### (8-3)

In the air conditioner 1 of the first embodiment, the microcomputer 220 of the refrigerant flow path switching unit 4 not only detects whether the backup board 300 is connected to the main board 200 but also detects whether the capacitor 330 is charged. When the capacitor 330 is not charged to a predetermined capacitance for some reason, there is a possibility that sufficient backup power is not supplied from the capacitor 330 to the main board 200 during a power failure or the like, and the microcomputer 220 is not able to change states of the shutoff valves 58A to 58D and 59A to 59D.

However, the microcomputer 220 detects whether the capacitor 330 is charged in the air conditioner 1 of the first embodiment, and thus, the notification based on the detection result can be performed (here, by the monitoring computer 90).

### (8-4)

In the air conditioner 1 of the first embodiment, the monitoring computer 90 notifies the administrator or the user of the air conditioner 1 that the capacitor 330 of the backup board 300 is not charged as described in (7). As a result, the administrator or the user of the air conditioner 1 who has been notified can determine whether to stop the operation of the air conditioner 1 and perform maintenance or replacement of the backup board 300 on which the capacitor 330 is mounted.

### (8-5)

In an inspection of the air conditioner 1 in a factory that manufactures the air conditioner 1 of the first embodiment, the connection or disconnection of the backup board 300 is confirmed, but the charging of the capacitor 330 of the backup board 300 is not confirmed. The charging of the capacitor 330 is confirmed on site when the air conditioner 1 is installed in a building.

As a result, a time for the inspection of the air conditioner 1 in the factory can be shortened.

### (9) Modifications

### (9 -1) Modification 1A

Although the monitoring computer 90 performs the notification based on the detection result as to whether the capacitor 330 is charged in the air conditioner 1 of the first embodiment, the notification may be performed by a remote control unit of the utilization unit 3 provided in a room. For example, a content of the notification may directly notify that the capacitor 330 is not charged, or may prompt maintenance.

### (9-2) Modification 1B

The air conditioner 1 of the first embodiment causes the monitoring computer 90 to perform the notification when the charging of the capacitor 330 has not been detected, and, in addition to or instead of this, the operation of the air conditioner 1 may be stopped or changed. For example, an operation change for setting an upper limit to the capacitance of the compressor 1 or an operation change for setting an upper limit to a valve opening degree may be performed.

### (9-3) Modification 1C

When the refrigerant leak sensor 95 detects the refrigerant leak during the operation the microcomputer 220 of the refrigerant flow path switching unit 4 sends the drive signal to the valve drive circuit 240 to fully close all the shutoff valves 58A to 58D and 59A to 59D in the air conditioner 1 of the first embodiment. Instead of this control, the shutoff valves 58A to 58D and 59A to 59D corresponding to the utilization unit 3, which corresponds to a room in which the refrigerant leak sensor 95 having detected the refrigerant leak is installed may be fully closed to continue the operation of the other utilization units 3. In this case, the outdoor microcomputer 620 continues the operation of the compressor 21.

### (9-4) Modification ID

The air conditioner 1 of the first embodiment adopts the configuration in which the four utilization units 3A-1 to 3D-2 and 3A-2 to 3D-2 are connected to each of the two refrigerant flow path switching units 4-1 and 4-2, but three or more refrigerant flow path switching units 4 may be disposed, or five or more utilization units 3 may be connected to one refrigerant flow path switching unit 4.

### <Second Embodiment

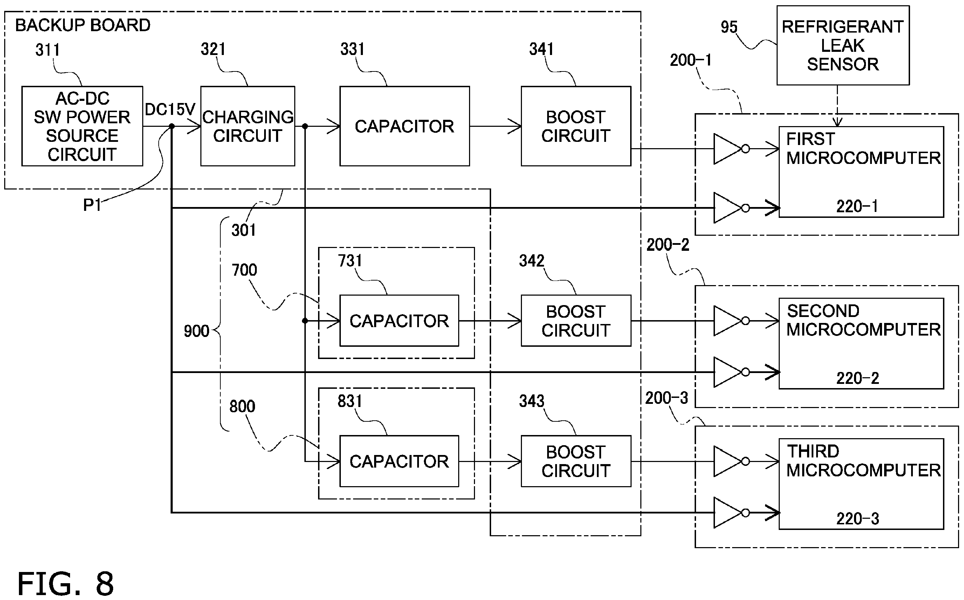

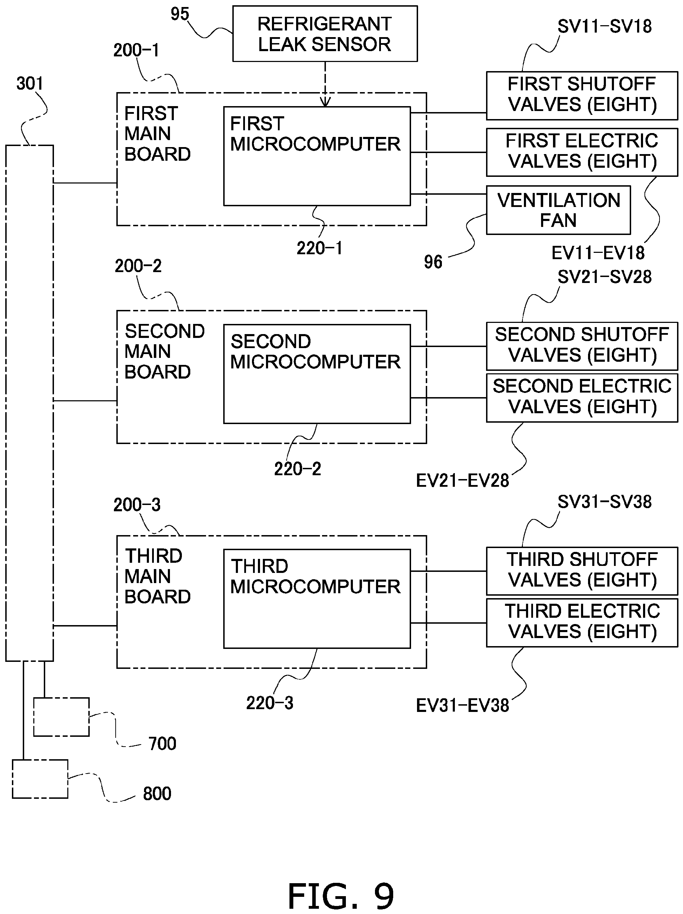

FIGS. 8 and 9 illustrate a first main board 200-1, a second main board 200-2, a third main board 200-3, a backup board 301, and capacitor boards 700 and 800 in an electric component box of a refrigerant flow path switching unit of an air conditioner according to a second embodiment. The air conditioner of the second embodiment has the same configuration as the air conditioner 1 of the first embodiment, and is different in the number and types of devices connected to the refrigerant flow path switching unit. Thus, a description regarding a heat source unit and a utilization unit having the same configuration as those the air conditioner 1 of the first embodiment will be omitted, and only a description regarding the respective boards of the refrigerant flow path switching unit will be given below. Regarding the refrigerant flow path switching unit, a description regarding the same configuration as that of the refrigerant flow path switching unit 4 of the first embodiment will be omitted.

The refrigerant flow path switching unit 4 of the air conditioner 1 of the first embodiment is provided with only the single main board 200, and the total of eight flow path switching valves 46A to 46D and 47A to 47D and the total of eight shutoff valves 58A to 58D and 59A to 59D are connected to the microcomputer 220 of the main board 200. However, the refrigerant flow path switching unit of the air conditioner according to the second embodiment is provided with the total of three main boards (first main board 200-1, second main board 200-2, and third main board 200-3). Eight first shutoff valves SV11 to SV18 and eight first electric valves EV11 to EV18 are connected to the first main board 200-1, and a ventilation fan 96 is connected thereto. Further, the refrigerant leak sensor 95 inputs a refrigerant leak detection signal only to the first main board 200-1. Eight second shutoff valves SV21 to SV28 and eight second electric valves EV21 to EV28 are connected to the second main board 200-2. Eight third shutoff valves SV31 to SV38 and eight third electric valves EV31 to EV38 are connected to the third main board 200-3. The first main board 200-1 includes a first microcomputer 220-1, the second main board 200-2 includes a second microcomputer 220-2, and the third main board 200-3 includes a third microcomputer 220-3. The first microcomputer 220-1 controls opening and closing of the eight first shutoff valves SV11 to SV18 and the eight first electric valves EV11 to EV18, and controls the ventilation fan. The second microcomputer 220-2 controls opening and closing of the eight second shutoff valves SV21 to SV28 and the eight second electric valves EV21 to EV28. The third microcomputer 220-3 controls opening and closing of the eight third shutoff valves SV31 to SV38 and the eight third electric valves EV31 to EV38.

Although the refrigerant flow path switching unit 4 of the air conditioner 1 of the first embodiment is provided with only the single backup board 300, the refrigerant flow path switching unit of the air conditioner according to the second embodiment is provided with the one backup board 301 and the two capacitor boards 700 and 800. The two capacitor boards 700 and 800 are connected to the backup board 301. Here, the one backup board 301 and the two capacitor boards 700 and 800 form a backup power source circuit 900. A charging circuit 321 connected to an AC-DC switching power source circuit 311 of the backup board 301 not only charges a capacitor 331 of the backup board 301 but also charges a capacitor 731 of the capacitor board 700 and a capacitor 831 of the capacitor board 800. The backup board 301 is provided with three boost circuits 341, 342, and 343. The first microcomputer 220-1 is supplied with backup power from the capacitor 331 of the backup board 301 via the boost circuit 341. The second microcomputer 220-2 is supplied with backup power from the capacitor 731 of the capacitor board 700 via the boost circuit 342. The third microcomputer 220-3 is supplied with backup power from the capacitor 831 of the capacitor board 800 via the boost circuit 343.

The first microcomputer 220-1 detects whether the backup board 301 is connected to the first main board 200-1 based on a voltage (voltage at a point PI in FIG. 8) on the upstream side of the charging circuit 321 of the backup board 301. The second microcomputer 220-2 detects whether the backup board 301 is connected to the second main board 200-2 based on the voltage on the upstream side of the charging circuit 321 of the backup board 301. The third microcomputer 220-3 detects whether the backup board 301 is connected to the third main board 200-3 based on the voltage on the upstream side of the charging circuit 321 of the backup board 301.

The first microcomputer 220-1 monitors a voltage supplied from the capacitor 331 to the first main board 200-1 via the boost circuit 341, and detects whether the capacitor 331 is charged based on the voltage. The second microcomputer 220-2 monitors a voltage supplied from the capacitor 731 to the second main board 200-2 via the boost circuit 342, and detects whether the capacitor 731 is charged based on the voltage. The third microcomputer 220-3 monitors a voltage supplied from the capacitor 831 to the third main board 200-3 via the boost circuit 343, and detects whether the capacitor 831 is charged based on the voltage.

The air conditioner of the second embodiment adopting the above configuration detects whether the backup board 301 is connected to the first main board 200-1, whether the backup board 301 is connected to the second main board 200-2, and whether the backup board 301 is connected to the third main board 200-3 based on the voltage on the upstream side of the charging circuit 321 of the backup board 301. As a result, even when each of the capacitor 331, the capacitor 731, and the capacitor 831 has a large capacitance and a long time is required for charging, the connection of the backup board 301 can be detected in a stage before the capacitor 331, the capacitor 731, and the capacitor 831 are sufficiently charged.

### REFERENCE SIGNS LIST

1: air conditioner (refrigeration cycle apparatus)
19: refrigerant circuit
21: compressor
58A to 58D: liquid-side shutoff valve (first valve)
59A to 59D: gas-side shutoff valve (first valve)
94: notification unit
200: main board (first board)
200-1: first main board (first board)
200-2: second main board (second board)
220: microcomputer (first control unit)
220-1: first microcomputer (first control unit)
220-2: second microcomputer (second control unit)
300: backup board (board forming backup power source circuit)
320: charging circuit (charging unit)
321: charging circuit (charging unit)
330: capacitor (first capacitor)
620: outdoor microcomputer (operation control unit controlling compressor)
731: capacitor (second capacitor)
900: backup power source circuit

## Claims

1. A refrigeration cycle apparatus (1) comprising:
a refrigerant circuit (19) including a first valve (58A to 58D, 59A to 59D, SV11 to SV18) that shuts off a refrigerant flow;
a first board (200, 200-1) including a first control unit (220, 220-1) that controls the first valve; and
a backup power source circuit (300, 900) that supplies power from a first capacitor (330, 331) to the first board,
wherein the backup power source circuit includes a charging unit (320, 321) that receives power supply from an outside and charges the first capacitor, and
the first control unit detects whether the backup power source circuit is connected to the first board based on a voltage on an upstream side of the charging unit of the backup power source circuit.

2. The refrigeration cycle apparatus according to claim 1, further comprising
an operation control unit (620) that controls a compressor (21),
wherein the refrigerant circuit further includes the compressor that compresses a refrigerant, and
the operation control unit does not start the compressor when the first control unit detects that the backup power source circuit is not connected to the first board.

3. The refrigeration cycle apparatus according to claim 1 or 2,
wherein the first control unit further detects whether the first capacitor is charged based on a voltage of the power supplied from the first capacitor to the first board.

4. The refrigeration cycle apparatus according to claim 3, further comprising
a notification unit (94) that performs a notification when that the first control unit detects that the first capacitor is not charged.

5. The refrigeration cycle apparatus according to any one of claims 1 to 4, further comprising
a second board (200-2) including a second control unit (220-2) that controls a second valve (SV21 to SV28),
wherein the refrigerant circuit further includes the second valve that shuts off a refrigerant flow,
the charging unit (321) further charges a second capacitor (731), and
the second control unit detects whether the backup power source circuit (900) is connected to the second board based on a voltage on an upstream side of the charging unit of the backup power source circuit.
